# EUROPÄISCHE PATENTSCHRIFT

(11) **EP 2 763 918 B1**
(45) Veröffentlichungstag und Bekanntmachung des Hinweises auf die Patenterteilung: **16.12.2015**
(21) Anmeldenummer: 12766939.8
(22) Anmeldetag: 17.09.2012
(51) Int. Cl.: B65G 47/51, B65G 47/64, A23G 4/00, B65G 57/32, B65B 35/50

(54) **VERFAHREN UND VORRICHTUNG ZUM FÖRDERN VON STREIFENFÖRMIGEN ODER PLATTENFÖRMIGEN PRODUKTEN**
METHOD AND DEVICE FOR CONVEYING STRIP- OR PLATE-SHAPED PRODUCTS
PROCÉDÉ ET DISPOSITIF DE TRANSPORT DE PRODUITS EN FORME DE BANDES OU DE PLAQUES

(30) Priorität: 05.10.2011 DE 102011084018
(43) Veröffentlichungstag der Anmeldung: 13.08.2014
(73) Patentinhaber: Loesch Verpackungstechnik GmbH, 96146 Altendorf (DE)
(72) Erfinder: HAMMACHER, Heinz-Peter, 96049 Bamberg (DE); MAIWALD, Andreas, 91332 Heiligenstadt i. Ofr. (DE)
(74) Vertreter: Prüfer & Partner GbR European Patent Attorneys
(86) Internationale Anmeldenummer: PCT/EP2012/068225
(87) Internationale Veröffentlichungsnummer: WO 2013/050234

(56) Entgegenhaltungen:
- EP-A2- 0 274 229
- EP-A2- 0 729 706
- DE-A1- 19 535 937
- DE-A1- 19 616 640
- DE-A1- 19 817 759
- DE-U1- 9 413 209
- FR-A1- 2 724 537
- US-A- 4 499 987

## Beschreibung

Die Erfindung betrifft ein Verfahren und eine Vorrichtung zum Fördern von streifenförmigen oder plattenförmigen Produkten, entsprechend dem Oberbegriff von Patentanspruch 1 bzw. dem Oberbegriff von Patentanspruch 11. Insbesondere betrifft die Erfindung ein derartiges Verfahren und eine derartige Vorrichtung zum Fördern von Vor- oder Zwischenprodukten der Lebensmittelindustrie, insbesondere Kaugummizwischenprodukten, aus denen im Anschluss an die erfindungsgemäße Fördervorrichtung im Zuge einer Weiterverarbeitung einzelne zum Verzehr bestimmte Produktportionen, insbesondere einzelne Kaugummistreifen, hergestellt werden.

Die Erfindung wird nachfolgend beispielhaft anhand von Kaugummi als dem zu fördernden Produkt beschrieben. Sofern nachfolgend von Kaugummis, Kaugummistreifen bzw. Streifenkaugummis oder Kaugummiplatten oder -matten die Rede ist, ist dieses lediglich exemplarisch zu verstehen. Die vorliegende Erfindung betrifft neben Kaugummis auch jegliche Art von flächigen, streifenförmigen oder plattenförmigen Gegenständen, insbesondere solche Gegenstände als Vor- oder Zwischenprodukte der Lebensmittelindustrie, die nach einer geeigneten Weiterverarbeitung und Portionierung zum menschlichen Verzehr geeignet sind. Hierbei kann es sich beispielsweise auch um Vor- oder Zwischenprodukte der Gebäck- oder Süßwarenindustrie und dergleichen handeln. Erfasst werden aber auch flächige, streifenförmige oder plattenförmige Produkte, die nicht zum Verzehr bestimmt sind, wie beispielsweise medizinische oder pharmazeutische Produkte, wie medizinische Diagnosestreifen, Blisterverpackungen, und dergleichen.

Wesentlich bei allen derartigen Gegenständen ist es, dass sie als flächiges, streifenförmiges oder platten- oder mattenförmiges Vor- oder Zwischenprodukt in einer kontinuierlich arbeitenden Vorrichtung hergestellt werden und dann an eine nachgeschaltete Vorrichtung übergeben werden, in der sie weitergefördert und insbesondere weiterverarbeitet werden. Diese letztere Weiterverarbeitungsvorrichtung ist dabei insbesondere eine Vorrichtung, in der einzelne Produktportionen (z.B. hier einzelne zum Verzehr bestimmte Kaugummistreifen) aus dem angelieferten größeren Vor- oder Zwischenprodukt gebildet werden, wobei die so entstandenen Einzelprodukte in der Weiterverarbeitungsvorrichtung dann insbesondere auch einzeln oder in Gruppen verpackt werden.

Im Fall von Kaugummis ist eine solche Weiterverarbeitungsvorrichtung beispielsweise in der deutschen Patentanmeldung 10 2011 075 439 beschrieben. Bei dieser Kaugummiverpackungsmaschine werden zunächst größere rechteckige Platten, insbesondere Streifen, aus Kaugummimaterial bereitgestellt, aus denen dann die einzelnen streifenförmigen Kaugummiportionen gebildet werden, wobei diese Einzelstreifen anschließend einzeln und/oder in Gruppen verpackt werden. Bei dieser und anderen bekannten Kaugummiverpackungsmaschinen werden die angelieferten größeren rechteckigen Produktplatten (so genannte "slabs") am Maschineneingang gestapelt in einem Magazin bereitgestellt, aus dem sie nacheinander entnommen und sukzessive in die Verpackungsmaschine eingeführt werden, in der dann die einzelnen Produktstreifen (Kaugummistreifen) aus der Platte gebildet werden, und in der die Einzelstreifen anschließend verpackt und weitergefördert werden.

Bei den bekannten Kaugummiverpackungsmaschinen können die Kaugummivorprodukte anstelle der genannten rechteckigen, länglichen Form ("slabs") auch in der Form größerer Matten oder Platten ("sheets") angeliefert werden. Diese streifenförmigen oder mattenförmigen oder plattenförmigen Kaugummivorprodukte werden typischerweise in einem Endlosstrang in einer Walzstraße produziert, wobei die Produktstreifen oder -matten am Ausgang der Walzstraße aus dem Endlosstrang abgetrennt, insbesondere abgeschnitten, und kalibriert werden. Die Produktion dieser Kaugummistreifen oder -platten in der Walzstraße ist ein kontinuierlich laufender Prozess, der nicht ohne weiteres und/oder kurzzeitig unterbrochen und angehalten werden kann. Somit werden aus dieser Produktionseinrichtung kontinuierlich Kaugummistreifen oder -matten ("slabs" bzw. "sheets") als Vorprodukte abgegeben. Diese Kaugummivorprodukte werden dann, wie oben beschrieben, an die Weiterverarbeitungs- und Verpackungsmaschine übergeben, von der sie entsprechend der laufenden Anlieferung kontinuierlich abgefördert werden müssen.

In der Weiterverarbeitungs- und Verpackungsmaschine werden aus den angelieferten Vorproduktstreifen dann die kleineren Kaugummistreifen als Einzelportionen abgetrennt. Sofern das Kaugummivorprodukt in Form größerer Matten oder Platten angeliefert wird, werden diese Matten/Platten ("sheets") zunächst in einzelne, größere Produktstreifen ("slabs") unterteilt, wobei diese Produktstreifen dann anschließend wiederum in die Einzelstreifen der Endprodukte unterteilt werden. Dieser Trennvorgang erfolgt beispielsweise mittels einer Rillenbildung in dem Produkt und einem Abtrennen der Einzelstreifen entlang der gebildeten Rillen. Dieser Prozess wird in der Fachwelt als "Rolling-and-Scoring-Prozess" bezeichnet.

Bei der oben beschriebenen Prozessabfolge besteht das Problem, dass die Weiterverarbeitungs- und Verpackungsmaschine unter Umständen nicht ständig kontinuierlich, ununterbrochen und fehlerfrei arbeitet. Beispielsweise kann es in dieser Maschine zu einem Produktstau und entsprechenden Blockaden oder Verstopfungen, zu fehlerhaft in Verpackungsmaterial eingewickelten Produkten und ähnlichen Fehlern kommen. Um derartige Störungen zu beheben, muss die Weiterverarbeitungs- und Verpackungsmaschine gegebenenfalls angehalten werden. In dieser Phase können die am Maschineneingang angelieferten Vorprodukte ("slabs"/"sheets") dann aber nicht abgenommen und in die Maschine eingespeist werden. Andererseits werden die Vorprodukte, wie oben beschrieben, aber weiter kontinuierlich, sukzessive von der Herstellungsmaschine aus dem Endlosstrang produziert und abgegeben, d.h. die Produktstreifen/-matten müssen am Ausgang der Herstellungsmaschine kontinuierlich abgenommen werden. Aufgrund der prozesstypischen Eigenschaften der Kaugummiherstellung kann die Herstellungsanlage (Strangwalzstraße) typischerweise jedenfalls nicht ohne weiteres und kurzfristig angehalten werden, insbesondere in solchen Fällen, in denen die Weiterverarbeitungsmaschine aufgrund von Störungen angehalten werden muss. Somit besteht grundsätzlich das Problem, dass Vorprodukte laufend von der Herstellungsmaschine abgegeben werden, wobei diese Produkte im Fall von Störungen aber unter Umständen nicht kontinuierlich von der Weiterverarbeitungsmaschine abgenommen werden können. Typischerweise müssen die Produkte dann unter anderem aus diesen Gründen zwischengelagert und konditioniert werden.

DE 196 16 640 A1 offenbart ein Verfahren gemäß dem Oberbegriff des Anspruchs 1.

DE 198 17 759 A1 offenbart eine Vorrichtung gemäß dem Oberbegriff des Anspruchs 11.

Diese beiden Beispiele offenbaren Speichervorrichtungen für plattenförmige Produkten.

Der Erfindung liegt die Aufgabe zugrunde, ein verbessertes Verfahren bzw. eine verbesserte Vorrichtung für die Förderung und Weiterverarbeitung der flächigen, streifenförmigen oder plattenförmigen Produkte zu schaffen, bei denen die im Stand der Technik gegebenen Nachteile und Probleme nicht auftreten. Insbesondere soll durch das erfindungsgemäße Verfahren und die erfindungsgemäße Vorrichtung ermöglicht werden, dass die Produkte laufend und kontinuierlich aus einer Herstellungsmaschine abgegeben werden können, selbst wenn eine nachgeschaltete Weiterverarbeitungsmaschine diese Produkte nicht sofort oder nahtlos, kontinuierlich abnehmen und weiterfördern kann.

Diese Aufgabe wird erfindungsgemäß durch ein Verfahren nach Anspruch 1 und eine Vorrichtung nach Anspruch 11 gelöst.

Das erfindungsgemäße Verfahren und die erfindungsgemäße Vorrichtung sind in der Prozessabfolge zwischen die Herstellung der flächigen, streifen- oder plattenförmigen Vorprodukte und die Weiterverarbeitung und Verpackung dieser Produkte geschaltet. Durch das erfindungsgemäße Verfahren und die erfindungsgemäße Vorrichtung wird somit eine Schnittstelle zwischen Herstellung und Weiterverarbeitung/Verpackung der Produkte gebildet, durch die die Prozessschritte der Produktherstellung und der Produktweiterverarbeitung und/oder -verpackung voneinander gelöst und entkoppelt werden. Mit anderen Worten wird ein der erfindungsgemäßen Vorrichtung vorgeschalteter Prozess von einem der erfindungsgemäßen Vorrichtung nachgeschalteten Prozess entkoppelt. Zu diesem Zweck sehen das erfindungsgemäße Verfahren und die erfindungsgemäße Vorrichtung eine Speicherung oder Pufferung der von dem Herstellungsprozess angelieferten Produkte vor, die es ermöglicht, dass die angelieferten Produkte nicht sofort, nahtlos an die Weiterverarbeitungsvorrichtung übergeben und von dieser abgefördert werden müssen. Dadurch können Störungen, die in dem Weiterverarbeitungsprozess möglicherweise auftreten, in der Weise abgefangen werden, dass sie die Anlieferung der Produkte aus dem Herstellungsprozess nicht behindern. Die erfindungsgemäße Lösung hat bezüglich einer Gesamtanlage aus Produktherstellung und Produktweiterverarbeitung und -verpackung damit gegenüber dem Stand der Technik eine geringere Fehleranfälligkeit, geringere oder kürzere Stillstandzeiten sowie einen geringeren Ausschuss oder Abfall unbrauchbarer Produkte und somit insgesamt eine höhere Leistungsfähigkeit der Gesamtanlage zur Folge.

Erfindungsgemäß werden die in der Speichervorrichtung gespeicherten Produkte mittels Fördermitteln aus der Speichervorrichtung abgegeben und an die Weiterverarbeitungsvorrichtung übergeben, wenn letztere wieder betriebsbereit ist. Zeitgleich mit diesem Abgabevorgang werden aber auch bereits neue Produkte von der Produktherstellungsvorrichtung in die Fördervorrichtung zugeführt und von anderen Fördermitteln in dieser gefördert und an die Weiterverarbeitungsvorrichtung übergeben. Gemäß einer bevorzugten Ausführungsform der Erfindung werden die Abgabe der gespeicherten Produkte aus der Speichervorrichtung und die Förderung der neu zugeführten Produkte in der Fördervorrichtung so gesteuert, dass die gespeicherten Produkte sukzessive derart aus der Speichervorrichtung abgegeben werden, dass jedes abgegebene Produkt im Wesentlichen pass- oder lagegenau auf eines der neu zugeführten, in der Fördervorrichtung geführten Produkte (sozusagen "huckepack") aufgelegt wird, so dass diese beiden Produkte anschließend gemeinsam an die Weiterverarbeitungsvorrichtung übergeben werden.

Da auf diese Weise mehr Produkte pro Zeiteinheit an der Weiterverarbeitungsvorrichtung ankommen als in dem Fall, in dem die Produkte direkt von der Herstellung zu der Weiterverarbeitung "durchgeschleust" werden, ohne in der Speichervorrichtung zwischengespeichert zu werden, muss die Arbeitsgeschwindigkeit der Weiterverarbeitungsvorrichtung während der Abgabe der Produkte aus der Speichervorrichtung derart gesteuert und insbesondere erhöht werden, dass die Weiterverarbeitungsvorrichtung alle an sie übergebenen Produkte kontinuierlich weiterverarbeiten kann, während von der Produktherstellungsvorrichtung Produkte kontinuierlich und mit gleich bleibender Geschwindigkeit zu der Fördervorrichtung zugeführt werden.

Erfindungsgemäß ist vorgesehen, dass die von der Herstellungsvorrichtung zugeführten Produkte unmittelbar aus der Fördervorrichtung wieder abgegeben werden, wenn die Weiterverarbeitungsvorrichtung nicht betriebsbereit ist und die Produkte nicht an letztere übergeben werden können und wenn gleichzeitig insbesondere die Speichervorrichtung bereits vollständig mit Produkten gefüllt ist. In einer bevorzugten Ausführungsform der Erfindung werden die Produkte aus der Fördervorrichtung hierbei an eine Aufnahmevorrichtung ausgegeben, in der die Produkte gesammelt werden. Die gesammelten Produkte können dann anschließend erneut der Fördervorrichtung zugeführt und/oder an die Weiterverarbeitungsvorrichtung übergeben werden, wenn letztere wieder betriebsbereit ist. Dieser Vorgang kann durch geeignete weitere Fördermittel bewerkstelligt werden, wird typischerweise aber insbesondere von einer Bedienungsperson der Gesamtanlage manuell durchgeführt.

Gemäß einer weiteren Ausführungsform der Erfindung werden die Eigenschaften, insbesondere die Abmessungen und/oder die Materialbeschaffenheit, der von der Produktherstellungsvorrichtung zu der Fördervorrichtung zugeführten Produkte mit Sensoreinrichtungen ermittelt, wobei dann solche Produkte, deren ermittelte Eigenschaften nicht mit vorgegebenen Werten übereinstimmen, mittels geeigneter Steuerungseinrichtungen und Fördermittel aus der Fördervorrichtüng ausgeschleust und nicht an die Weiterverarbeitungsvorrichtung übergeben werden.

Weitere Einzelheiten und Vorteile der Erfindung ergeben sich aus der nachfolgenden detaillierten Beschreibung eines Ausführungsbeispiels anhand der beigefügten Zeichnungen.
Fig. 1 zeigt eine schematische Ansicht der erfindungsgemäßen Fördervorrichtung von der Seite.
Fig. 2 zeigt eine schematische Draufsicht von oben auf die Fördermittel zum Abgeben der Produkte aus der Fördervorrichtung, wenn die Weiterverarbeitungsvorrichtung nicht betriebsbereit und die Speichervorrichtung vollständig mit Produkten gefüllt ist.
Fig. 3a und 3b zeigen in einer vergrößerten perspektivischen Ansicht ein Detail der Fördermittel zum Abgeben der Produkte aus der Fördervorrichtung in zwei Betriebsstellungen.

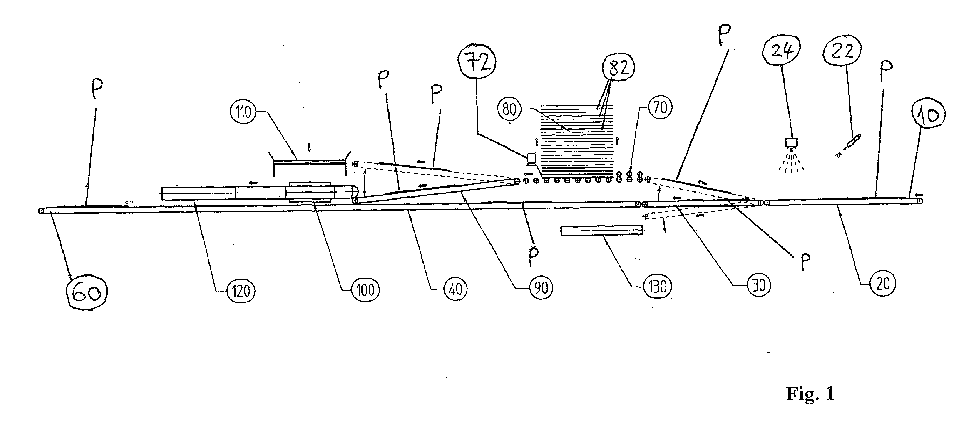

Fig. 1 zeigt eine Vorrichtung zum Fördern von flächigen, streifenförmigen oder plattenförmigen Produkten, wobei die Förderrichtung in dieser Darstellung von rechts nach links verläuft (vgl. Pfeile in der Zeichnung). Vor dem Eingang 10 der Förderstrecke (d.h. ganz rechts in Fig. 1) befindet sich die (nicht dargestellte) Vorrichtung zum Herstellen der zu fördernden Produkte P. Über die Zuführvorrichtung 20 werden die Produkte P von der Herstellungsvorrichtung zu der Gesamtfördervorrichtung zugeführt. In der Fördervorrichtung werden die Produkte P dann mit Fördermitteln 30, 40 sukzessive weitergefördert. Hinter dem Ausgang 60 dieser Fördervorrichtung (d.h. ganz links in Fig. 1) befindet sich die (nicht dargestellte) Vorrichtung zum Weiterverarbeiten und/oder Verpacken der Produkte P. Durch das Fördermittel 60 werden die Produkte von der Fördervorrichtung an diese Weiterverarbeitungsvorrichtung übergeben.

Die in Fig. 1 gezeigte Fördervorrichtung weist des Weiteren eine Speichervorrichtung 80 auf, in der die Produkte P aufgenommen und insbesondere gespeichert werden können, wenn die Weiterverarbeitungsvorrichtung (vorübergehend) nicht betriebsbereit ist und die Produkte somit nicht an diese übergeben werden können. Wenn die Weiterverarbeitungsvorrichtung anschließend wieder betriebsbereit ist und Produkte aufnehmen kann, werden die in der Speichervorrichtung 80 (vorläufig) gespeicherten Produkte aus dieser abgegeben. In Förderrichtung hinter der Speichervorrichtung 80 (d.h. in Fig. 1 links von der Speichervorrichtung) sind Vorrichtungen 100, 110, 120 angeordnet, über die die in die Fördervorrichtung zugeführten Produkte P aus der Fördervorrichtung abgegeben werden können, wenn die Weiterverarbeitungsvorrichtung nicht betriebsbereit ist und die Produkte nicht an diese übergeben werden können, und insbesondere wenn die Speichervorrichtung 80 bereits vollständig mit Produkten gefüllt ist.

Einzelheiten der in Fig. 1 gezeigten Fördervorrichtung sowie der Durchlauf der Produkte P durch die Fördervorrichtung werden nachfolgend detailliert beschrieben. Soweit dabei von Förderbändern gesprochen wird, ist dieses lediglich beispielhaft zu verstehen, da für die Fördermittel oder Fördervorrichtungen neben Förderbändern auch andere geeignete Fördereinrichtungen verwendet werden können, wie beispielsweise Kettenfördereinrichtungen und dergleichen.

Am Eingang 10 der Fördervorrichtung (d.h. ganz rechts in Fig. 1) werden die Produktstreifen P (insbesondere Kaugummistreifen) einzeln von der Herstellungsmaschine übernommen. In der Herstellungsmaschine werden die Produktstreifen P aus einer Walzstraße von einem Endlosstrang abgetrennt (z.B. mit einem Schneidmesser abgeschnitten) und kalibriert. Über das Zuführband 20 werden die Produktstreifen P in die Fördervorrichtung eingeführt und dabei in Förderrichtung beschleunigt, so dass zwischen zwei aufeinander folgenden Produktstreifen P ein Abstand gegeben ist. Dieser Abstand ist unter anderem erforderlich, damit die einzelnen Produktstreifen nachfolgend von der Sensorik der Anlage erkannt werden können, was zur Steuerung der einzelnen nachfolgenden Verfahrensschritte erforderlich ist, wie unten erläutert wird.

Das Zuführband 20 kann insbesondere als Inspektionsband ausgeführt sein, d.h. im Bereich dieses Förderbands werden mittels geeigneter Sensor- und Kameraeinrichtungen 22 sowie Lichtquellen 24 bestimmte Eigenschaften des Produktstreifens erfasst. Hierbei werden insbesondere die Abmessungen sowie die Qualität oder Beschaffenheit des Materials des Produktstreifens ermittelt. Wahlweise kann im Bereich des Förderbands 20 auch ein Metalldetektor vorgesehen sein, der den Produktstreifen auf eventuelle Metallhaltigkeit (z.B. aufgrund von in vorhergehenden Verfahrensschritten erfolgten Einschlüssen von möglicherweise heruntergefallenen Maschinenteilen, und dergleichen) überprüft. Diejenigen Produkte, die auf diese Weise als fehlerhaft ermittelt werden, werden aus der För dervorrichtung ausgeschleust, wie es nachfolgend beschrieben wird.

Von dem Zuführförderband oder Inspektionsband 20 werden die Produktstreifen P an das nachfolgende Förderband 30 übergeben. Das Förderband 30 ist an seinem in Förderrichtung hinteren Ende (sein linkes Ende in Fig. 1) in drei verschiedene Stellungen verschwenkbar, wie es in Fig..1 erkennbar ist. Je nach Schwenkstellung des Förderbands 30 werden die Produktstreifen P somit auf unterschiedliche Förderbahnen gelenkt. Insofern kann das Förderband 30 auch als "Weichenband" bezeichnet werden.

Sofern im Bereich des Inspektionsbands 20 festgestellt wurde, dass bestimmte Eigenschaften des Produktstreifens P nicht mit den vorgegebenen Werten übereinstimmen, d.h. dass das betreffende Produkt somit als fehlerhaft oder "schlecht" erkannt wird, weil z.B. seine Abmessungen nicht mit den gewünschten, vorgegebenen Dimensionen übereinstimmen und/oder weil z.B. Metalleinschlüsse oder andere Verunreinigungen in dem Produkt vorhanden sind, wird das Weichenband 30 in Fig. 1 in seine untere Stellung verschwenkt. In dieser Stellung werden die Produktstreifen P von dem Weichenband 30 an ein nachfolgendes Förderband 130 übergeben, über das diese fehlerhaften Produkte aus der Fördervorrichtung ausgeschleust werden (sog. "Ausscheideband" 130). Die Bewegungsrichtung des Förderbands 130 verläuft dabei senkrecht zu der Zeichnungsebene in Fig. 1. Hierbei kann das Förderband 130 beispielsweise so arbeiten, dass die Produkte nach vorne aus der Gesamtanlage ausgeschleust werden (d.h. aus der Zeichnungsebene in Fig. 1 heraus), wenn z.B. lediglich die Abmessungen des Produkts nicht den vorgegebenen Werten entsprechen, das Produkt im Übrigen aber in Ordnung ist. In diesem Fall kann das Produkt von dem Ausscheideband 130 an eine Produktsammeleinrichtung übergeben werden, von der aus das Produkt anschließend unter Umständen wieder in den gesamten Arbeitsprozess eingeschleust oder zurückgespeist wird, um erneut verarbeitet und beispielsweise hinsichtlich seiner Abmessungen korrigiert werden zu können (so genanntes "re-working").

Sofern im Bereich des Inspektionsbands 20 festgestellt wurde, dass insbesondere die Materialeigenschaften des Produkts nicht in Ordnung sind (weil beispielsweise Metallteile in dem Produktmaterial enthalten sind), muss dieses Produkt aus dem Gesamtprozess als Ausschuss ausgesondert werden, d.h. es darf nicht wieder in den Prozess zurückgeschleust werden. In diesem Fall kann sich das Ausscheideband 130 in der anderen Richtung bewegen, d.h. in die Zeichnungsebene in Fig. 1 hinein, und das Produkt auf diese Weise aus der Anlage ausschleusen. Auch hier können diese fehlerhaften Produkte wiederum von einer Sammeleinrichtung aufgenommen werden. Optional kann vorgesehen sein, dass das Weichenband 30 mittels geeigneter Steuerungseinrichtungen von der Bedienungsperson der Anlage gezielt in die untere Position verschwenkt wird, so dass alle über das Förderband 20 zugeführten Produkte P sofort über das Ausscheideband 130 aus der Anlage ausgeschleust werden, unabhängig davon, ob es sich um "gute" oder "schlechte" (d.h. fehlerhafte) Produkte handelt.

Sofern im Bereich des Inspektionsbands 20 festgestellt wurde, dass die zugeführten Produktstreifen P in Ordnung sind und alle maßgeblichen Eigenschaften den vorgegebenen Werten entsprechen, und sofern gleichzeitig die der Fördervorrichtung nachgeschaltete Weiterverarbeitungs- und/oder Verpackungsmaschine betriebsbereit ist und Produkte aufnehmen kann, bleibt das Förderband 30 in der Normalstellung (d.h. in der horizontalen, mittleren Position in Fig. 1) bzw. wird in diese Stellung geschwenkt. Die Produktstreifen P werden dann von dem Weichenband 30 an ein nachfolgendes Förderband 40 übergeben, von dem die Produkte P direkt zum Ausgang 60 der Anlage transportiert werden, wo sie dann an die nachgeschaltete Weiterverarbeitungs-/Verpackungsmaschine übergeben werden.

Sofern im Bereich des Inspektionsbands 20 festgestellt wurde, dass die Produktstreifen P hinsichtlich ihrer Eigenschaften in Ordnung sind, sofern aber die nachgeschaltete Weiterverarbeitungsvorrichtung nicht betriebsbereit ist und die Produktstreifen somit nicht an diese übergeben werden können, werden die Produktstreifen in der Speichervorrichtung 80 zwischengespeichert. Dazu wird das Förderband bzw. Weichenband 30 in die in Fig. 1 dargestellte obere Position verschwenkt. Die zugeführten Produkte werden somit nicht mehr an das Förderband 40 zur direkten Durchleitung an die Weiterverarbeitungsmaschine übergeben, sondern werden nunmehr der Speichervorrichtung 80 zugeführt. In diesem Fall werden die Produktstreifen P von dem Weichenband 30 an eine Rollenfördereinrichtung 70 übergeben, mittels der die Produktstreifen in die Speichervorrichtung 80 eingeführt werden.

Die Speichervorrichtung 80 ist eine so genannte Paternoster-Speichereinrichtung, insbesondere eine Gefachevorrichtung mit mehreren Fächern 82, die jeweils einen Produktstreifen P aufnehmen. Mittels der Rollenbahn 70 werden die Streifen P jeweils in ein Fach 82 der Speichervorrichtung 80 in Längsrichtung eingeführt. Dazu ist an der Rollenbahn 70 in Förderrichtung stromabwärts an dem (in Fig. 1) seitlichen bzw. hinteren Ende der Speichervorrichtung 80 ein Anschlag 72 vorgesehen, der so angeordnet und ausgerichtet ist, dass der von der Rollenbahn 70 in das betreffende Fach 82 der Speichervorrichtung 80 eingeführte Produktstreifen P genau in dem betreffenden Speicherfach 82 zu liegen kommt, d.h. nicht seitlich über das Speicherfach 82 hinaus vorsteht. Die einzelnen Fächer 82 des Speichers 80 sind beispielsweise auf einem umlaufenden Zahnriemen nebeneinander, bzw. in Fig. 1 übereinander, angebracht. In einer konkreten Ausführungsform kann der Speicher 80 beispielsweise solche Fächer 82 zur Aufnahme von 560 Produktstreifen aufweisen.

Der Zahnriemen mit den darauf angebrachten Fächern 82 ist typischerweise zwischen zwei Endstellungen hin und her beweglich, wobei die Produktstreifen P bei der Befüllung der Speichervorrichtung 80 sukzessive in den einzelnen Fächern 82 aufgenommen werden, während sich diese Gefachevorrichtung ausgehend von der ersten Endstellung sukzessive in die Richtung zu der zweiten Endstellung hin bewegt. Wenn die Gefachevorrichtung die zweite Endstellung erreicht hat und somit alle Fächer 82 mit jeweils einem Produktstreifen P gefüllt sind, kann die Speichervorrichtung 80 keine weiteren Produktstreifen mehr aufnehmen. In diesem Fall werden die weiteren über das Weichenband 30 zu der Rollenbahn 70 zugeführten Produktstreifen P beispielsweise an dem letzten befüllten Fach des Speichers 80 vorbei geführt, wobei der Anschlag 72 so verstellt wird, dass die in Längsrichtung ankommenden Produktstreifen P nicht mehr an ihm anschlagen sondern durchgelassen werden und somit von der Rollenbahn 70 stromabwärts von der Speichervorrichtung 80 sofort wieder ausgegeben und insbesondere an ein nächstes Förderband 90 übergeben werden, von dem sie weitergefördert werden, wie es unten weiter beschrieben wird.

Wenn die vollständig oder teilweise gefüllte Speichervorrichtung 80 wieder entleert werden soll, insbesondere in dem Fall, dass die nachgeschaltete Weiterverarbeitungsmaschine wieder betriebsbereit ist und wieder Produkte aufnehmen kann, bewegt sich die Gefachevorrichtung des Speichers 80 aus der Richtung der zweiten Endstellung zu der ersten Endstellung hin zurück, wobei die einzelnen Produktstreifen P über die Rollenbahn 70 sukzessive, umgekehrt analog zu dem Vorgang des Befüllens, aus den Fächern 82 der Speichervorrichtung 80 in Längsrichtung ausgeschoben werden und in Förderrichtung hinter der Speichervorrichtung 80 an das nächste Förderband 90 (sog. "Ausspeicherband") übergeben und von diesem abgefördert werden.

Das Befüllen und das sich daran anschließende Entleeren der Speichervorrichtung 80 erfolgen somit derart, dass bei dem Entleeren der Speichervorrichtung dasjenige Produkt P als erstes aus der Speichervorrichtung abgegeben wird, das beim Befüllen der Speichervorrichtung als letztes in dieser aufgenommen wurde, und dass folglich dasjenige Produkt als letztes aus der Speichervorrichtung abgegeben wird, das als erstes in der Speichervorrichtung aufgenommen wurde. Die Speichervorrichtung 80 arbeitet somit nach dem "first-in-last-out"-Prinzip.

Wenn die Weiterverarbeitungs-/Verpackungsmaschine nach einer Unterbrechung wieder betriebsbereit ist und somit keine Produkte mehr in der Speichervorrichtung 80 zwischengespeichert oder gepuffert werden müssen, wird die Speichervorrichtung 80 entleert, wie zuvor beschrieben. Die von der Herstellungsvorrichtung kontinuierlich zu der Gesamtfördervorrichtung zugeführten Produktstreifen P werden nun nicht über die Rollenbahn 70 zu der Speichervorrichtung 80 zugeführt, sondern über das in der (mittleren) Normalstellung befindliche Weichenband 30 an das nachfolgende Förderband 40 übergeben und von diesem zum Ausgang 60 gefördert. Gleichzeitig werden die von der Speichervorrichtung 80 abgegebenen Produkte an das Ausspeicherband 90 übergeben und von diesem weitergefördert. Dabei werden die von dem Ausspeicherband 90 geförderten Produkte an das Förderband 40 übergeben, d.h. dem von diesem regulär geförderten Produktstrom zugeführt. Die Geschwindigkeit der Förderbänder (insbesondere des Ausspeicherbands 90) wird dabei so gesteuert, dass jeder über das Ausspeicherband 90 zu dem Förderband 40 zugeführte Produktstreifen pass- oder lagegenau ("huckepack") auf einen auf dem Förderband 40 geförderten Produktstreifen aufgelegt wird. Die beiden dann aufeinander liegenden Produktstreifen werden anschließend von dem Förderband 40 weitergefördert und gemeinsam am Ausgang 60 an die Weiterverarbeitungsmaschine übergeben. In einer konkreten Ausführungsform wird jeweils ein über das Ausspeicherband 90 zugeführter Produktstreifen nicht auf jeden der über das Förderband 40 ankommenden Produktstreifen aufgelegt, sondern lediglich auf jeden n-ten Produktstreifen. In einer konkreten Ausführungsform kann beispielsweise n = 8 gelten.

Während des Entleerens der Speichervorrichtung 80 werden pro Zeiteinheit somit mehr Produktstreifen P an die nachfolgende Verpackungsmaschine übergeben als in dem Fall der Normalförderung (d.h. dem Fall, in dem lediglich eine Förderung über das Förderband 40 ohne Einschleusung weiterer Produktstreifen über das Ausspeicherband 90 erfolgt). In dieser Phase der Entleerung der Speichervorrichtung 80 wird die Prozessgeschwindigkeit der nachgeschalteten Weiterverarbeitüngsmaschine derart erhöht, dass sie alle an sie übergebenen Produktstreifen P kontinuierlich verarbeiten kann. Die Arbeitsgeschwindigkeit der nachgeschalteten Verpackungsmaschine wird dabei insbesondere mittels einer in der Fördervorrichtung vorgesehenen Sensorik bzw. deren übergeordneter Steuerung geregelt, insbesondere mittels im Bereich der Förderbänder 30, 40 und 90 vorgesehener Sensoren zur Erfassung der jeweiligen Lage oder Position der Produktstreifen, wobei geeignete Steuerungseinrichtungen mit diesen Sensoren gekoppelt sind. Die Förderbänder 30, 40 und 90 werden darüber hinaus von Servomotoren angetrieben, so dass insgesamt eine Positionsbestimmung, Längenmessung und Wegverfolgung der Produktstreifen möglich ist, über die die Förderung der Produktstreifen durch die Gesamtanlage vollautomatisch gesteuert wird.

Auf diese Weise wird in der Phase der Entleerung der Speichervorrichtung 80 somit auch die Arbeitsgeschwindigkeit der nachgeschalteten Verpackungsmaschine gesteuert, wobei über einen so genannten Erhöhungsfaktor berechnet wird, auf welchem Produktstreifen des auf dem Förderband 40 geförderten Produktstroms jeweils ein weiterer Produktstreifen aufgelegt wird, der über das Ausspeicherband 90 zu dem Produktstrom auf dem Förderband 40 zugeführt wird. Sobald die Speichervorrichtung 80 entleert ist, bewirkt die Steuerung, dass die nachgeschaltete Verpackungsmaschine wieder mit normaler Arbeitsgeschwindigkeit läuft, da nunmehr nur noch die reguläre Menge an Produktstreifen über das Förderband 40 zugeführt wird. Während in der Phase der Entleerung der Speichervorrichtung 80 die Arbeitsgeschwindigkeit der nachgeschalteten Verpackungsmaschine also erhöht wird, wird allerdings die Geschwindigkeit an den Förderbändern 20, 30 und 40 der Fördervorrichtung nicht verändert und insbesondere nicht erhöht.

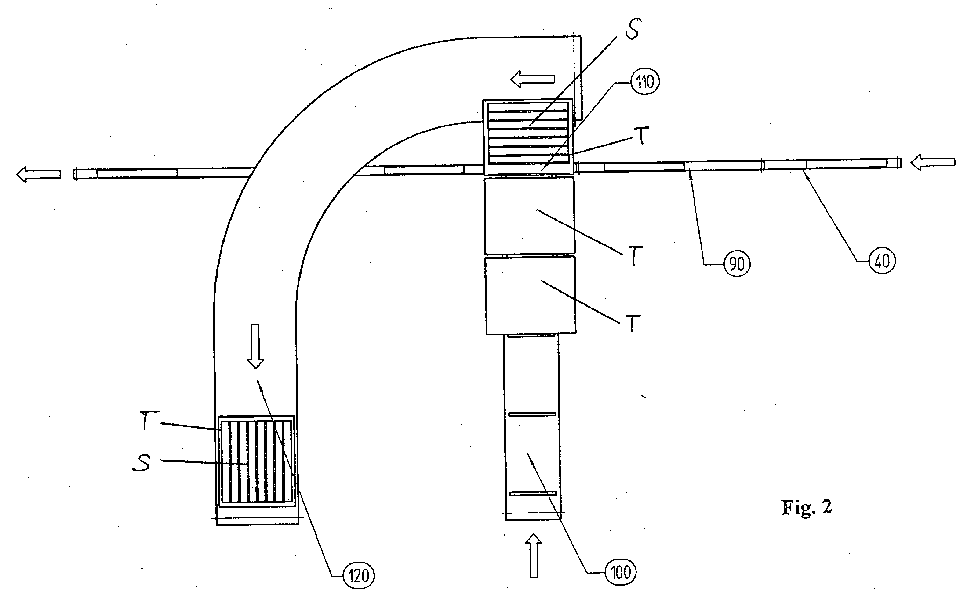

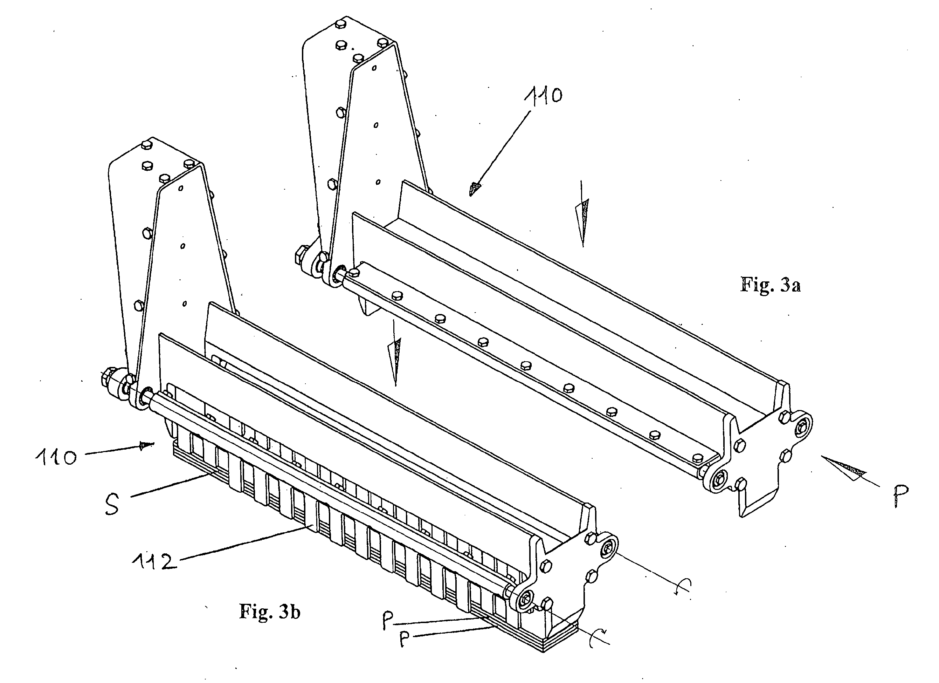

Nachfolgend wird der Fall behandelt, dass die sich an die Fördervorrichtung anschließende Weiterverarbeitungs-/Verpackungsmaschine nicht betriebsbereit ist, d.h. keine Produkte aufnehmen kann, und dass gleichzeitig die Speichervorrichtung 80 bereits vollständig mit Produkten gefüllt ist. Wie vorher schon beschrieben wurde, werden die von der Herstellungsvorrichtung eingespeisten Produktstreifen P über das Weichenband 30, das sich jetzt in seiner (in Fig. 1 gezeigten) oberen Position befindet, zu der Rollenbahn 70 zugeführt. Da die Produktstreifen jetzt jedoch nicht mehr in der Speichervorrichtung 80 aufgenommen werden können, werden sie von der Rollenbahn 70 direkt auf das Förderband (Ausspeicherband) 90 ausgegeben. Das Förderband 90 kann so ausgebildet sein, dass es zwei Arbeitspositionen einnehmen kann, wie es in Fig. 1 dargestellt ist. In einer ersten (in Fig. 1 nach unten geschwenkten) Position führt das Förderband 90 die Produkte auf das Förderband 40, wie es oben beschrieben wurde. Dieses ist jedoch nur zulässig, wenn die Produkte am Ausgang 60 an die nachgeschaltete Verpackungsmaschine übergeben werden können. Ist der Ausgang 60 mangels Betriebsbereitschaft der Verpackungsmaschine geschlossen, wird das Förderband 90 in seine zweite (in Fig. 1 obere) Position verschwenkt, wodurch die von dem Förderband 90 geförderten Produktstreifen P nunmehr an weitere, nachgeschaltete Fördereinrichtungen 100, 110, 120 übergeben werden können, die in einer Draufsicht im Detail in Fig. 2 und in einer weiteren Detailansicht in den Figs. 3a und 3b dargestellt sind (so genannte "Handentnahme").

Diese dem Ausspeicherband 90 nachgeschalteten weiteren Fördereinrichtungen (Handentnahme) weisen insbesondere eine Trichtereinrichtung 110 auf (siehe Figs. 3a, 3b), an die die Produktstreifen P von dem Förderband/Ausspeicherband 90 übergeben werden. In der Trichtereinrichtung (Fülltrichter) 110 werden mehrere Produktstreifen (z.B. ein bis drei Produktstreifen) gesammelt, d.h. entsprechend ihrer sukzessiven Zuführung aufeinander gestapelt (Stapel S). Dadurch können u.a. Zeitspannen kompensiert werden, die zum Wechseln nachfolgender, mit den Produktstreifen zu befüllender Aufnahmevorrichtungen ("Trays") erforderlich sind. Die Richtung der Zuführung der Produktstreifen P zu dem Trichter 110 ist in Fig. 3a durch den Pfeil rechts vorne angedeutet. Unter dem Trichter 110 wird eine Aufnahmevorrichtung T zum Sammeln der Produktstreifen bereitgehalten. Diese Aufnahmevorrichtungen ("Trays") T werden über ein z.B. mit Nocken oder Anschlägen für die Trays versehenes Zuführband 100 in den Bereich unter dem Fülltrichter 110 zugeführt (vgl. Fig. 2). Dabei können diese Aufnahmevorrichtungen T beispielsweise so ausgebildet sein, dass sie mehrere nebeneinander und ggfs. übereinander angeordnete Stapel S der Produktstreifen P aufnehmen. Die Aufnahmevorrichtungen T werden über den Fülltrichter 110 dabei insbesondere derart befüllt, dass zunächst einzelne Produktstreifen P in dem Trichter 110 gesammelt werden und dass der Trichter sich anschließend öffnet und den Stapel S der gesammelten Produktstreifen P nach unten auf das Tray T absetzt (vgl. Fig. 3b sowie Richtung der Pfeile oberhalb des Trichters 110 in den Figs. 3a und 3b).

Der Fülltrichter 110 kann beispielsweise verzahnte, wechselseitig ineinander eingreifende Trichterklappen 112 aufweisen, die jeweils über eine Drehachse gelagert sind und nach unten aufgeklappt werden, wenn der Trichter geöffnet wird (vgl. die in Fig. 3b vorne rechts eingezeichneten Drehachsen). Die Öffnungsbewegung der Trichterklappen 112 kann dabei so erfolgen, dass eine der Trichterklappen 112 mit ihrer Außenseite an einen vorher bereits auf dem Tray T abgelegten Produktstapel S anstößt und diesen im Zuge ihrer Öffnungsbewegung leicht seitlich so verschiebt, dass auf dem Tray T Platz geschaffen wird für den nunmehr neu auf dem Tray T abzulegenden nächsten Stapel S. Dadurch wird ebenfalls verhindert, dass nacheinander auf dem Tray T abgelegte Stapel S übereinander liegen oder sich überlappen. Auf diese Weise wird eine geordnete Ablage der Stapel S der Produktstreifen P auf dem Tray T realisiert, wie es in Fig. 2 angedeutet ist.

Die leeren Aufnahmevorrichtungen bzw. leere Trays T werden von einer Bedienungsperson der Anlage auf das Förderband oder Tray-Zuführband 100 aufgesetzt und (in Richtung des Pfeils in Fig. 2) in die Anlage eingeführt. Die Trays werden dann, wie zuvor beschrieben, über das Ausspeicherband 90 und den Fülltrichter 110 automatisch mit Produktstreifen P (bzw. Produktstreifenstapeln S) gefüllt, wobei die Trays T von dem Förderband 100 sukzessive vorgeschoben werden. Sobald ein Tray vollständig mit Produktstreifen P befüllt ist, wird es von dem Förderband 100 an das nachfolgende Förderband bzw. Entnahmeband 120 übergeben, von dem es (in Richtung der Pfeile in Fig. 2) aus der Anlage herausgefahren wird. Am Ende des Förderbands 120 wird das gefüllte Tray T von der Bedienungsperson manuell entnommen. Von hier aus können die Produktstreifen P entweder erneut in die Fördervorrichtung eingegeben oder direkt an die Weiterverarbeitungs-/Verpackungsmaschine (insbesondere ein Produktstreifenmagazin dieser Maschine) übergeben werden.

Optional kann vorgesehen sein, dass die zugeführten Produktstreifen P vom Anlagenbetreiber mittels geeigneter Steuerungseinrichtungen auch direkt in die nachgeschaltete Handentnahme 100, 110, 120 ausgegeben werden können, selbst wenn die Speichervorrichtung 80 noch nicht gefüllt ist und an sich Produktstreifen aufnehmen könnte, wenn die nachgeschaltete Verpackungsmaschine nicht betriebsbereit ist und keine Produktstreifen aufnehmen kann.

Für den Fall, dass die nachfolgende Verpackungsmaschine und auch die Handentnahme 100, 110, 120 nicht betriebsbereit sind und auch die Speichervorrichtung 80 bereits vollständig gefüllt ist, kann vorgesehen sein, dass die an sich von dem Inspektionsband 20 für "gut" befundenen Produktstreifen P über das nach unten geschwenkte Weichenband 30 an das Ausscheideband 130 übergeben und über dieses aus der Anlage ausgeführt werden. Wie eingangs beschrieben wurde, können die Produktstreifen hierbei als Ausschuss ausgesondert oder (manuell) wieder in die Anlage eingespeist werden.

In entsprechender Weise kann in dem Fall, dass das Bedienungspersonal die gefüllten Trays T nicht von dem Entnahmeband 120 aus der Anlage entnimmt, so dass die Handentnahme 100, 110, 120 nicht betriebsbereit ist, obwohl die über das Ausspeicherband 90 zugeführten Produktstreifen in die Handentnahme laufen müssten, um einen kontinuierlichen Produktfluss zu gewährleisten, das Weichenband 30 in seine untere Stellung verschwenkt werden, so dass die an sich für "gut" befundenen Produktstreifen, wie zuvor beschrieben, über das Ausscheideband 130 aus der Anlage ausgeschleust und im Einzelfall als Ausschuss ausgesondert oder (manuell) wieder in die Anlage eingespeist werden.

Mit der beschriebenen Fördervorrichtung wird insgesamt somit eine Entkopplung der Produktherstellung von der Produktweiterverarbeitung bzw. -verpackung realisiert, so dass sich im Bereich der nachgeschalteten Weiterverarbeitung eventuell auftretende Störungen nicht auf die Herstellung der Produkte auswirken. Die Entkopplung der Funktionen der Produktherstellung und der Produktweiterverarbeitung bzw. -verpackung wird dabei insbesondere durch die Speichervorrichtung 80, die als "Bypass" oder Puffer für die zugeführten Produkte dient, sowie durch die "Handentnahme" 100, 110, 120 realisiert. Mittels geeigneter Sensor-, Steuerungs- und Servoantriebseinrichtungen kann der Produktfluss durch die Gesamtvorrichtung somit in geeigneter Weise automatisch an die jeweils gegebene Situation angepasst werden.

## Patentansprüche

1. Verfahren zum Fördern von streifenförmigen oder plattenförmigen Produkten (P) mit einer Fördervorrichtung, mit folgenden Schritten:
- Zuführen (10, 20) der Produkte (P) aus einer kontinuierlich arbeitenden Vorrichtung, von der die Produkte hergestellt werden, zu der Fördervorrichtung;
- Fördern (30, 40) der Produkte (P) in der Fördervorrichtung sukzessive aufeinander folgend;
- Übergeben (60) der Produkte (P) von der Fördervorrichtung an eine Vorrichtung, von der die Produkte (P) kontinuierlich weiterverarbeitet werden;
- Aufnehmen (30, 70) der zugeführten Produkte (P) in einer Speichervorrichtung (80) in der Fördervorrichtung, wenn die Vorrichtung zur Weiterverarbeitung der Produkte (P) nicht betriebsbereit ist und die Produkte (P) nicht an die Weiterverarbeitungsvorrichtung übergeben werden können ; und
- Abgeben (100, 110, 120) der zugeführten Produkte (P) aus der Fördervorrichtung, wenn die Vorrichtung zur Weiterverarbeitung der Produkte (P) nicht betriebsbereit ist und die Produkte (P) nicht an die Weiterverarbeitungsvorrichtung übergeben werden können und wenn die Speichervorrichtung (80) vollständig mit Produkten (P) gefüllt ist;
**gekennzeichnet durch** folgenden Schritt:
- Abgeben (70, 90) der gespeicherten Produkte (P) aus der Speichervorrichtung (80), wenn die Vorrichtung zur Weiterverarbeitung der Produkte (P) wieder betriebsbereit ist und die Produkte (P) wieder an die Weiterverarbeitungsvorrichtung übergeben werden können, wobei die in der Speichervorrichtung (80) gespeicherten Produkte (P) aus der Speichervorrichtung (80) abgegeben und an die Weiterverarbeitungsvorrichtung übergeben werden, während gleichzeitig neu von der Produktherstellungsvorrichtung zugeführte Produkte (P) in der Fördervorrichtung gefördert und ohne Aufnahme in der Speichervorrichtung (80) an die Weiterverarbeitungsvorrichtung übergeben werden.

2. Verfahren nach Anspruch 1, **dadurch gekennzeichnet, dass** die Produkte (P) sukzessive in der Speichervorrichtung (80) aufgenommen werden, und dass die in der Speichervorrichtung (80) gespeicherten Produkte (P) sukzessive derart aus der Speichervorrichtung (80) wieder abgegeben werden, dass dasjenige Produkt (P) als erstes aus der Speichervorrichtung (80) abgegeben wird, das als letztes in der Speichervorrichtung (80) aufgenommen wurde, und dass dasjenige Produkt (P) als letztes aus der Speichervorrichtung (80) abgegeben wird, das als erstes in der Speichervorrichtung (80) aufgenommen wurde.

3. Verfahren nach Anspruch 1 oder 2, **dadurch gekennzeichnet, dass** die Abgabe der gespeicherten Produkte (P) aus der Speichervorrichtung (80) und die Förderung der neu zugeführten Produkte (P) in der Fördervorrichtung so gesteuert werden, dass die gespeicherten Produkte (P) sukzessive derart aus der Speichervorrichtung (80) abgegeben werden, dass ein abgegebenes oder jedes abgegebene Produkt (P) im wesentlichen lagegenau auf eines der neu zugeführten, in der Fördervorrichtung geförderten Produkte (P) aufgelegt wird, wobei diese beiden Produkte (P) anschließend gemeinsam an die Weiterverarbeitungsvorrichtung übergeben werden.

4. Verfahren nach Anspruch 3, **dadurch gekennzeichnet, dass** ein aus der Speichervorrichtung (80) abgegebenes Produkt (P) jeweils auf ein n-tes der neu zugeführten, in der Fördervorrichtung geförderten Produkte (P) aufgelegt und gemeinsam mit diesem an die Weiterverarbeitungsvorrichtung übergeben wird.

5. Verfahren nach einem der vorhergehenden Ansprüche, **dadurch gekennzeichnet, dass** die Arbeitsgeschwindigkeit der Weiterverarbeitungsvorrichtung während der Abgabe der Produkte (P) aus der Speichervorrichtung (80) derart gesteuert und insbesondere erhöht wird, dass die Weiterverarbeitungsvorrichtung alle an sie übergebenen Produkte (P) kontinuierlich verarbeiten kann, während von der Produktherstellungsvorrichtung Produkte (P) kontinuierlich und mit gleich bleibender Geschwindigkeit zu der Fördervorrichtung zugeführt werden.

6. Verfahren nach einem der vorhergehenden Ansprüche, **dadurch gekennzeichnet, dass** die Produkte (P), die aus der Fördervorrichtung abgegeben werden, wenn die Vorrichtung zur Weiterverarbeitung der Produkte (P) nicht betriebsbereit ist und wenn die Speichervorrichtung (80) vollständig mit Produkten (P) gefüllt ist, an eine Aufnahmevorrichtung (T) ausgegeben werden, in der die Produkte (P, S) gesammelt werden, wobei die gesammelten Produkte (P, S) erneut der Fördervorrichtung zugeführt und/oder an die Weiterverarbeitungsvorrichtung übergeben werden, wenn die Weiterverarbeitungsvorrichtung wieder betriebsbereit ist.

7. Verfahren nach Anspruch 6, **dadurch gekennzeichnet, dass** mehrere der Produkte (P), die aus der Fördervorrichtung abgegeben werden, zu einem Stapel (S) zusammengefasst werden und als Stapel (S) an die Aufnahmevorrichtung (T) ausgegeben werden.

8. Verfahren nach einem der vorhergehenden Ansprüche, **dadurch gekennzeichnet, dass** die Eigenschaften, insbesondere die Abmessungen und/oder die Materialbeschaffenheit, der von der Produktherstellungsvorrichtung zu der Fördervorrichtung zugeführten Produkte (P) mit Sensoreinrichtungen (22, 24) ermittelt werden, und dass solche Produkte (P), deren ermittelte Eigenschaften nicht mit vorgegebenen Werten übereinstimmen, aus der Fördervorrichtung ausgeschleust (130) und nicht an die Weiterverarbeitungsvorrichtung übergeben werden.

9. Verfahren nach einem der Ansprüche 1 bis 8, **dadurch gekennzeichnet, dass** das streifenförmige oder plattenförmige Produkt (P) ein Vorprodukt der Lebensmittelindustrie, insbesondere ein Kaugummizwischenprodukt, ist, aus dem in der Weiterverarbeitungsvorrichtung einzelne zum Verzehr bestimmte Produktportionen, insbesondere einzelne Kaugummistreifen, hergestellt werden.

10. Verfahren nach Anspruch 9, **dadurch gekennzeichnet, dass** die Weiterverarbeitungsvorrichtung eine Maschine zum Verpacken der einzelnen Produktportionen, insbesondere der hergestellten Kaugummistreifen, einzeln und/oder in Gruppen ist.

11. Vorrichtung zum Fördern von streifenförmigen oder plattenförmigen Produkten (P), mit folgenden Merkmalen:
- Vorrichtungen (20) zum Zuführen der Produkte (P) aus einer der Fördervorrichtung vorgeschalteten, kontinuierlich arbeitenden Vorrichtung, von der die Produkte (P) hergestellt werden, zu der Fördervorrichtung;
- erste Fördermittel (30, 40) zum sukzessiven Fördern der Produkte (P) in der Fördervorrichtung;
- Vorrichtungen (60) zum Übergeben der Produkte (P) von der Fördervorrichtung an eine der Fördervorrichtung nachgeschaltete Vorrichtung, von der die Produkte kontinuierlich weiterverarbeitet werden;
- eine Speichervorrichtung (80) zum Aufnehmen der in die Fördervorrichtung zugeführten Produkte (P), wenn die Vorrichtung zur Weiterverarbeitung der Produkte (P) nicht betriebsbereit ist und die Produkte (P) nicht an die Weiterverarbeitungsvorrichtung übergeben werden können, und zum Abgeben der gespeicherten Produkte (P), wenn die Weiterverarbeitungsvorrichtung wieder betriebsbereit ist und die Produkte (P) wieder an die Weiterverarbeitungsvorrichtung übergeben werden können; und
- Vorrichtungen (100, 110, 120) zum Abgeben der in die Fördervorrichtung zugeführten Produkte aus der Fördervorrichtung, wenn die Weiterverarbeitungsvorrichtung nicht betriebsbereit ist und die Produkte nicht an die Weiterverarbeitungsvorrichtung übergeben werden können und wenn die Speichervorrichtung (80) vollständig mit Produkten (P) gefüllt ist,
**gekennzeichnet durch** folgendes Merkmal:
- zweite Fördermittel (90) zum Aufnehmen der aus der Speichervorrichtung (80) abgegebenen Produkte (P) und zum Übergeben der Produkte (P) an die ersten Fördermittel (40), wenn die Weiterverarbeitungsvorrichtung wieder betriebsbereit ist, wobei die ersten. Fördermittel (30, 40) von der Produktherstellungsvorrichtung zugeführte Produkte (P) fördern, und wobei die ersten und die zweiten Fördermittel (30, 40; 90) derart ausgebildet sind, dass sie gleichzeitig Produkte (P) fördern.

12. Vorrichtung nach Anspruch 11, **dadurch gekennzeichnet, dass** die Speichervorrichtung (80) eine sich zwischen zwei Endstellungen hin und her bewegliche Gefachevorrichtung mit mehreren Fächern (82) aufweist, wobei jeweils ein Fach (82) zur Aufnahme eines Produkts (P) ausgebildet ist, wobei die Produkte (P) sukzessive in der Speichervorrichtung (80) aufgenommen werden, während sich die Gefachevorrichtung ausgehend von der ersten Endstellung in einer Richtung zu der zweiten Endstellung hin bewegt, und wobei die in der Speichervorrichtung (80) gespeicherten Produkte (P) sukzessive aus der Speichervorrichtung (80) wieder abgegeben werden, während sich die Gefachevorrichtung zu der ersten Endstellung hin zurück bewegt, wobei dasjenige Produkt (P) als erstes aus der Speichervorrichtung (80) abgegeben wird, das als letztes in der Speichervorrichtung (80) aufgenommen wurde, und wobei dasjenige Produkt (P) als letztes aus der Speichervorrichtung (80) abgegeben wird, das als erstes in der Speichervorrichtung (80) aufgenommen wurde.

13. Vorrichtung nach Anspruch 11 oder 12, **gekennzeichnet durch** Steuerungseinrichtungen, die die ersten und die zweiten Fördermittel (30, 40; 90) derart steuern, dass ein von dem zweiten Fördermittel (90) gefördertes Produkt (P) im wesentlichen lagegenau auf eines der von dem ersten Fördermittel (30, 40) geförderten Produkte (P) aufgelegt wird, so dass diese beiden Produkte (P) anschließend gemeinsam an die Weiterverarbeitungsvorrichtung übergeben werden.

14. Vorrichtung nach Anspruch 13, **dadurch gekennzeichnet, dass** die Steuerungseinrichtungen die ersten und die zweiten Fördermittel (30, 40; 90) derart steuern, dass ein von dem zweiten Fördermittel (90) gefördertes Produkt (P) jeweils auf ein n-tes der von dem ersten Fördermittel (30, 40) geförderten Produkte (P) aufgelegt wird.

15. Vorrichtung nach einem der Ansprüche 11 bis 14, **gekennzeichnet durch** Steuerungseinrichtungen, die die Arbeitsgeschwindigkeit der Weiterverarbeitungsvorrichtung während der Abgabe der Produkte (P) aus der Speichervorrichtung (80) derart steuern und insbesondere erhöhen, dass die Weiterverarbeitungsvorrichtung alle an sie übergebenen Produkte (P) kontinuierlich verarbeiten kann, während von der Produktherstellungsvorrichtung Produkte (P) kontinuierlich und mit gleich bleibender Geschwindigkeit zu der Fördervorrichtung zugeführt werden.

16. Vorrichtung nach einem der Ansprüche 11 bis 15, **dadurch gekennzeichnet, dass** die Vorrichtungen zum Abgeben der in die Fördervorrichtung zugeführten Produkte (P) aus der Fördervorrichtung, wenn die Weiterverarbeitungsvorrichtung nicht betriebsbereit und die Speichervorrichtung (80) vollständig mit Produkten (P) gefüllt ist, dritte Fördermittel (100, 110, 120) sowie Aufnahmevorrichtungen (T) zum Sammeln der Produkte (P) aufweisen.

17. Vorrichtung nach Anspruch 16, **dadurch gekennzeichnet, dass** die dritten Fördermittel eine Vorrichtung (110) zum Zusammenfassen mehrerer der Produkte (P), die aus der Fördervorrichtung abgegeben werden, zu einem Stapel (S) und zum Ausgeben der Produkte (P) als Stapel (S) an die Aufnahmevorrichtung (T) aufweisen.

18. Vorrichtung nach Anspruch 16 oder 17, **dadurch gekennzeichnet, dass** die dritten Fördermittel eine Fördervorrichtung (100) zum Zuführen leerer Aufnahmevorrichtungen (T) und eine Fördervorrichtung (120) zum Abführen gefüllter Aufnahmevorrichtungen (T) aufweisen.

19. Vorrichtung nach einem der Ansprüche 16 bis 18, **dadurch gekennzeichnet, dass** die zweiten Fördermittel (90) zwischen einer ersten Position und einer zweiten Position verstellbar sind, wobei sich die zweiten Fördermittel (90) in der ersten Position befinden, wenn die Weiterverarbeitungsvorrichtung betriebsbereit ist und die Produkte (P) an die ersten Fördermittel (40) übergeben werden, und wobei sich die zweiten Fördermittel (90) in der zweiten Position befinden, wenn die Weiterverarbeitungsvorrichtung nicht betriebsbereit ist und die Produkte (P) an die dritten Fördermittel (100, 110, 120) übergeben werden.

20. Vorrichtung nach einem der Ansprüche 11 bis 19, **dadurch gekennzeichnet, dass** die ersten Fördermittel ein Weichenfördermittel (30) aufweisen, das mindestens zwischen einer ersten Position und einer zweiten Position verstellbar ist, wobei sich das Weichenfördermittel (30) in der ersten Position befindet, wenn die Weiterverarbeitungsvorrichtung betriebsbereit ist und die Produkte (P) an die Weiterverarbeitungsvorrichtung übergeben werden können, und wobei sich das Weichenfördermittel (30) in der zweiten Position befindet, wenn die Weiterverarbeitungsvorrichtung nicht betriebsbereit ist und die Produkte (P) nicht an die Weiterverarbeitungsvorrichtung übergeben werden können, so dass die Produkte (P) der Speichervorrichtung (80) zugeführt werden.

21. Vorrichtung nach einem der Ansprüchen 11 bis 20, **gekennzeichnet durch** Sensoreinrichtungen (22, 24) zum Ermitteln der Eigenschaften, insbesondere der Abmessungen und/oder der Materialbeschaffenheit, der von der Produktherstellungsvorrichtung zu der Fördervorrichtung zugeführten Produkte (P), **durch** mit den Sensoreinrichtungen (22, 24) gekoppelte Steuerungseinrichtungen, sowie **durch** von den Steuerungseinrichtungen gesteuerte vierte Fördermittel (130) zum Ausschleusen solcher Produkte (P) aus der Fördervorrichtung, deren ermittelte Eigenschaften nicht mit vorgegebenen Werten übereinstimmen.

22. Vorrichtung nach Anspruch 21, **dadurch gekennzeichnet, dass** das Weichenfördermittel (30) der ersten Fördermittel von den Steuerungseinrichtungen in eine dritte Position verstellbar ist, in der die Produkte (P), deren ermittelte Eigenschaften nicht mit den vorgegebenen Werten übereinstimmen, an die vierten Fördermittel (130) übergeben werden.

23. Vorrichtung nach einem der Ansprüche 11 bis 22, **dadurch gekennzeichnet, dass** das streifenförmige oder plattenförmige Produkt (P) ein Vorprodukt der Lebensmittelindustrie, insbesondere ein Kaugummizwischenprodukt, ist, aus dem in der Weiterverarbeitungsvorrichtung einzelne zum Verzehr bestimmte Produktportionen, insbesondere einzelne Kaugummistreifen, hergestellt werden.

24. Vorrichtung nach Anspruch 23, **dadurch gekennzeichnet, dass** die Weiterverarbeitungsvorrichtung eine Maschine zum Verpacken der einzelnen Produktportionen, insbesondere der hergestellten Kaugummistreifen, einzeln und/oder in Gruppen ist.

## Claims

1. A method for conveying strip-shaped or plate-shaped products (P) using a conveying device, said method having the following steps:
- supply (10, 20) the products (P) out of a continuously operating device, by means of which the products are produced, to the conveying device;
- convey (30, 40) the products (P) in the conveying device following one another in succession;
- transfer (60) the products (P) from the conveying device to a device by means of which the products (P) are continuously further processed;
- accommodate (30, 70) the supplied products (P) in a storage device (80) in the conveying device when the device for further processing the products (P) is not ready for operation and the products (P) are not able to be transferred to the further processing device; and
- discharge (100, 110, 120) the supplied products (P) out of the conveying device when the device for further processing the products (P) is not ready for operation and the products (P) are not able to be transferred to the further processing device and when the storage device (80) is completely filled with products (P); **characterized by** the following step:
- discharge (70, 90) the stored products (P) out of the storage device (80) when the device for further processing the products (P) is ready for operation again and the products (P) are able to be transferred to the further processing device again, wherein the products (P) stored in the storage device (80) are discharged out of the storage device (80) and transferred to the further processing device, whilst at the same time products (P) newly supplied by the product producing device are conveyed in the conveying device and transferred to the further processing device without being accommodated in the storage device (80).

2. The method as claimed in claim 1, **characterized in that** the products (P) are accommodated in succession in the storage device (80), and **in that** the products (P) stored in the storage device (80) are discharged again in succession out of the storage device (80) in such a manner that that product (P) which was accommodated last in the storage device (80) is discharged first out of the storage device (80), and **in that** that product (P) which was accommodated first in the storage device (80) is discharged last out of the storage device (80).

3. The method as claimed in claim 1 or 2, **characterized in that** the discharging of the stored products (P) out of the storage device (80) and the conveying of the newly supplied products (P) in the conveying device are controlled such that the stored products (P) are discharged in succession out of the storage device (80) in such a manner that a discharged product (P) or each discharged product (P) is placed in a substantially positionally accurate manner onto one of the newly supplied products (P) conveyed in the conveying device, wherein said two products (P) are then transferred together to the further processing device.

4. The method as claimed in claim 3, **characterized in that** a product (P) discharged out of the storage device (80) is placed in each case onto an n^{th} product of the newly supplied products (P) conveyed in the conveying device and is transferred to the further processing device together with said n^{th} product.

5. The method as claimed in one of the preceding claims, **characterized in that** the operating speed of the further processing device during the discharging of the products (P) out of the storage device (80) is controlled in such a manner and in particular increased that the further processing device is continuously able to process all the products (P) transferred to it, whilst products (P) from the product producing device are supplied continuously and at a constant speed to the conveying device.

6. The method as claimed in one of the preceding claims, **characterized in that** when the device for further processing the products (P) is not ready for operation and when the storage device (80) is completely filled with products (P), the products (P) which are discharged out of the conveying device are output to an accommodating device (T) in which the products (P, S) are collected, wherein the collected products (P, S) are supplied once again to the conveying device and/or are transferred to the further processing device when the further processing device is ready for operation again.

7. The method as claimed in claim 6, **characterized in that** several of the products (P) which are discharged out of the conveying device are assembled together to form a stack (S) and are output to the accommodating device (T) as a stack (S).

8. The method as claimed in one of the preceding claims, **characterized in that** the characteristics, in particular the dimensions and/or the material quality, of the products (P) supplied from the product producing device to the conveying device are detected by way of sensor devices (22, 24), and **in that** such products (P), the detected characteristics of which do not match predefined values, are transferred out (130) of the conveying device and are not transferred to the further processing device.

9. The method as claimed in one of claims 1 to 8, **characterized in that** the strip-shaped or plate-shaped product (P) is a primary product of the foodstuff industry, in particular an intermediate chewing gum product, out of which individual product portions, in particular individual strips of chewing gum, intended for consumption, are produced in the further processing device.

10. The method as claimed in claim 9, **characterized in that** the further processing device is a machine for packaging the individual product portions, in particular the chewing gum strips produced, individually and/or in groups.

11. A device for conveying strip-shaped or plate-shaped products (P), said device having the following features:
- devices (20) for supplying the products (P) out of a continuously operating device, arranged upstream of the conveying device, by means of which the products (P) are produced, to the conveying device;
- first conveying means (30, 40) for conveying the products (P) in succession in the conveying device;
- devices (60) for transferring the products (P) from the conveying device to a device, arranged downstream of the conveying device, by means of which the products are continuously further processed;
- a storage device (80) for accommodating the products (P) supplied into the conveying device when the device for further processing the products (P) is not ready for operation and the products (P) are not able to be transferred to the further processing device, and for discharging the stored products (P) when the further processing device is ready for operation again and the products (P) are able to be transferred to the further processing device again; and
- devices (100, 110, 120) for discharging the products supplied into the conveying device out of the conveying device when the further processing device is not ready for operation and the products are not able to be transferred to the further processing device and when the storage device (80) is completely filled with products (P);
**characterized by** the following feature:
- second conveying means (90) for accommodating the products (P) discharged out of the storage device (80) and for transferring the products (P) to the first conveying means (40) when the further processing device is ready for operation again, wherein the first conveying means (30, 40) convey products (P) supplied by the product producing device, and wherein the first and the second conveying means (30, 40; 90) are designed such that they convey products (P) at the same time.

12. The device as claimed in claim 11, **characterized in that** the storage device (80) comprises a compartment device with several compartments (82), said compartment device being movable back and forth between two end positions, wherein in each case a compartment (82) is realized for accommodating a product (P), wherein the products (P) are accommodated in succession in the storage device (80), whilst the compartment device, proceeding from the first end position, is moved in a direction toward the second end position, and wherein the products (P) stored in the storage device (80) are discharged again in succession out of the storage device (80), whilst the compartment device is moved back to the first end position, wherein that product (P) which was accommodated last in the storage device (80) is output first from the storage device (80), and wherein that product (P) which was accommodated first in the storage device (80) is output last out of the storage device (80).

13. The device as claimed in claim 11 or 12, **characterized by** control devices which control the first and the second conveying means (30, 40; 90) in such a manner that a product (P) conveyed by the second conveying means (90) is placed in a substantially positionally accurate manner onto one of the products (P) conveyed by the first conveying means (30, 40) such that said two products (P) are then transferred together to the further processing device.

14. The device as claimed in claim 13, **characterized in that** the control devices control the first and the second conveying means (30, 40; 90) in such a manner that a product (P) conveyed by the second conveying means (90) is placed in each case onto an n^{th} product of the products (P) conveyed by the first conveying means (30, 40).

15. The device as claimed in one of claims 11 to 14, **characterized by** control devices which control and in particular increase the operating speed of the further processing device during the discharging of the products (P) out of the storage device (80) in such a manner that the further processing device is able to process all the products (P) transferred to it continuously, whilst products (P) from the product producing device are supplied continuously and at a constant speed to the conveying device.

16. The device as claimed in one of claims 11 to 15, **characterized in that** when the further processing device is not ready for operation and the storage device (80) is completely filled with products (P), the devices for discharging the products (P) supplied into the conveying device out of the conveying device comprise third conveying means (100, 110, 120) as well as accommodating devices (T) for collecting the products (P).

17. The device as claimed in claim 16, **characterized in that** the third conveying means comprise a device (110) for combining several of the products (P) which are discharged out of the conveying means to form a stack (S) and for outputting the products (P) to the accommodating device (T) as a stack (S).

18. The device as claimed in claim 16 or 17, **characterized in that** the third conveying means comprise a conveying device (100) for supplying empty accommodating devices (T) and a conveying device (120) for removing filled accommodating devices (T).

19. The device as claimed in one of claims 16 to 18, **characterized in that** the second conveying means (90) are adjustable between a first position and a second position, wherein the second conveying means (90) are situated in the first position when the further processing device is ready for operation and the products (P) are transferred to the first conveying means (40), and wherein the second conveying means (90) are situated in the second position when the further processing device is not ready for operation and the products (P) are transferred to the third conveying means (100, 110, 120).

20. The device as claimed in one of claims 11 to 19, **characterized in that** the first conveying means comprise a points conveying means (30) which is adjustable at least between a first position and a second position, wherein the points conveying means (30) is situated in the first position when the further processing device is ready for operation and the products (P) are able to be transferred to the further processing device, and wherein the points conveying means (30) is situated in the second position when the further processing device is not ready for operation and the products (P) are not able to be transferred to the further processing device such that the products (P) are supplied to the storage device (80).

21. The device as claimed in one of claims 11 to 20, **characterized by** sensor devices (22, 24) for detecting the characteristics, in particular the dimensions and/or the material quality, of the products (P) supplied from the product producing device to the conveying device, by means of control devices coupled with the sensor devices (22, 24), as well as by fourth conveying means (130) controlled by the control devices for removing such products (P) out of the conveying device, the detected characteristics of which do not match the predefined values.

22. The device as claimed in claim 21, **characterized in that** the points conveying means (30) of the first conveying means is adjustable by the control devices into a third position in which the products (P), the determined characteristics of which do not match the predefined values, are transferred to the fourth conveying means (130).

23. The device as claimed in one of claims 11 to 22, **characterized in that** the strip-shaped or plate-shaped product (P) is a primary product of the foodstuff industry, in particular an intermediate chewing gum product, out of which individual product portions, in particular individual strips of chewing gum, intended for consumption, are produced in the further processing device.

24. The device as claimed in claim 23, **characterized in that** the further processing device is a machine for packaging the individual product portions, in particular the chewing gum strips produced, individually and/or in groups.

## Revendications

1. Procédé de transport de produits en forme de bandes ou de plaques (P) avec un dispositif de transport, comprenant les étapes suivantes :
- amenée (10, 20) des produits (P) depuis un dispositif en fonctionnement continu par lequel les produits sont fabriqués jusqu'au dispositif de transport ;
- transport (30, 40) des produits (P) dans le dispositif de transport successivement l'un après l'autre ;
- transfert (60) des produits (P) depuis le dispositif de transport à un dispositif par lequel les produits (P) sont traités ultérieurement de façon continue ;
- réception (30, 70) des produits (P) amenés dans un dispositif de stockage (80) dans le dispositif de transport lorsque le dispositif destiné au traitement ultérieur des produits (P) n'est pas opérationnel et que les produits (P) ne peuvent pas être transférés au dispositif de traitement ultérieur ; et
- déchargement (100, 110, 120) des produits (P) amenés depuis le dispositif de transport lorsque le dispositif destiné au traitement ultérieur des produits (P) n'est pas opérationnel et que les produits (P) ne peuvent pas être transférés au dispositif de traitement ultérieur et lorsque le dispositif de stockage (80) est entièrement rempli de produits (P) ;
**caractérisé par** l'étape suivante :
- déchargement (70, 90) des produits (P) stockés depuis le dispositif de stockage (80) lorsque le dispositif destiné au traitement ultérieur des produits (P) est à nouveau opérationnel et que les produits (P) peuvent à nouveau être transférés au dispositif de traitement ultérieur, les produits (P) stockés dans le dispositif de stockage (80) étant déchargés depuis le dispositif de stockage (80) et transférés au dispositif de traitement ultérieur tandis qu'en même temps, des produits (P) nouvellement amenés depuis le dispositif de fabrication de produits sont transportés dans le dispositif de transport et transférés au dispositif de traitement ultérieur sans être reçus dans le dispositif de stockage (80).

2. Procédé selon la revendication 1, **caractérisé en ce que** les produits (P) sont reçus successivement dans le dispositif de stockage (80) et **en ce que** les produits (P) stockés dans le dispositif de stockage (80) sont à nouveau déchargés successivement depuis le dispositif de stockage (80) de telle sorte que le produit (P) qui est déchargé en premier du dispositif de stockage (80) est celui qui a été reçu en dernier dans le dispositif de stockage (80) et que le produit (P) qui est déchargé en dernier du dispositif de stockage (80) est celui qui a été reçu en premier dans le dispositif de stockage (80).

3. Procédé selon la revendication 1 ou 2, **caractérisé en ce que** le déchargement des produits (P) stockés depuis le dispositif de stockage (80) et le transport des produits (P) nouvellement amenés dans le dispositif de transport sont commandés de telle sorte que les produits (P) stockés sont déchargés successivement depuis le dispositif de stockage (80) de telle sorte qu'un produit (P) déchargé ou chaque produit (P) déchargé est déposé essentiellement à la même place sur l'un des produits (P) nouvellement amenés transportés dans le dispositif de transport, ces deux produits (P) étant ensuite transférés conjointement au dispositif de traitement ultérieur.

4. Procédé selon la revendication 3, **caractérisé en ce qu'**un produit (P) déchargé depuis le dispositif de stockage (80) est à chaque fois déposé sur un énième des produits (P) nouvellement amenés transportés dans le dispositif de transport et transféré conjointement avec celui-ci au dispositif de traitement ultérieur.

5. Procédé selon l'une des revendications précédentes, **caractérisé en ce que** la vitesse de travail du dispositif de traitement ultérieur pendant le déchargement des produits (P) depuis le dispositif de stockage (80) est commandée, et en particulier, augmentée de telle sorte que le dispositif de traitement ultérieur peut traiter de façon continue tous les produits (P) qui lui sont transférés tandis que des produits (P) sont amenés de façon continue et à une vitesse restant constante depuis le dispositif de fabrication de produits au dispositif de transport.

6. Procédé selon l'une des revendications précédentes, **caractérisé en ce que** les produits (P) qui sont déchargés depuis le dispositif de transport lorsque le dispositif destiné au traitement ultérieur des produits (P) n'est pas opérationnel et lorsque le dispositif de stockage (80) est entièrement rempli de produits (P) sont remis à un dispositif de réception (T) dans lequel les produits (P, S) sont recueillis, les produits (P, S) recueillis étant à nouveau amenés au dispositif de transport et/ou au dispositif de traitement ultérieur lorsque le dispositif de traitement ultérieur est à nouveau opérationnel.

7. Procédé selon la revendication 6, **caractérisé en ce que** plusieurs des produits (P) qui sont déchargés depuis le dispositif de transport sont rassemblés dans une pile (S) et remis au dispositif de réception (T) sous forme de pile (S).

8. Procédé selon l'une des revendications précédentes, **caractérisé en ce que** les caractéristiques, en particulier les dimensions et/ou les propriétés matérielles, des produits (P) amenés depuis le dispositif de fabrication de produits jusqu'au dispositif de transport sont déterminées au moyen de dispositifs de capteurs (22, 24) et **en ce que** les produits (P) dont les caractéristiques déterminées ne coïncident pas avec des valeurs prédéfinies sont évacués du dispositif de transport (130) et ne sont pas transférés au dispositif de traitement ultérieur.

9. Procédé selon l'une des revendications 1 à 8, **caractérisé en ce que** le produit en forme de bande ou de plaque (P) est un produit préliminaire de l'industrie alimentaire, en particulier un produit intermédiaire de gomme à mâcher, à partir duquel des portions de produit individuelles destinées à la consommation, en particulier des tablettes de gomme à mâcher individuelles, sont fabriquées dans le dispositif de traitement ultérieur.

10. Procédé selon la revendication 9, **caractérisé en ce que** le dispositif de traitement ultérieur est une machine destinée à emballer les portions de produit individuelles, en particulier les tablettes de gomme à mâcher fabriquées, individuellement et/ou en groupes.

11. Dispositif de transport de produits en forme de bandes ou de plaques (P) ayant les caractéristiques suivantes :
- des dispositifs (20) destinés à amener les produits (P) depuis un dispositif en fonctionnement continu installé en amont du dispositif de transport, par lequel les produits (P) sont fabriqués, jusqu'au dispositif de transport ;
- des premiers moyens de transport (30, 40) destinés à transporter successivement les produits (P) dans le dispositif de transport ;
- des dispositifs (60) destinés à transférer les produits (P) depuis le dispositif de transport à un dispositif installé en aval du dispositif de transport par lequel les produits sont traités ultérieurement de façon continue ;
- un dispositif de stockage (80) destiné à recevoir les produits (P) amenés dans le dispositif de transport lorsque le dispositif destiné au traitement ultérieur des produits (P) n'est pas opérationnel et que les produits (P) ne peuvent pas être transférés au dispositif de traitement ultérieur et destiné à décharger les produits (P) stockés lorsque le dispositif de traitement ultérieur est à nouveau opérationnel et que les produits (P) peuvent à nouveau être transférés au dispositif de traitement ultérieur ; et
- des dispositifs (100, 110, 120) destinés à décharger les produits amenés dans le dispositif de transport depuis le dispositif de transport lorsque le dispositif de traitement ultérieur n'est pas opérationnel et que les produits ne peuvent pas être transférés au dispositif de traitement ultérieur et lorsque le dispositif de stockage (80) est entièrement rempli de produits (P) ; **caractérisé par** la caractéristique suivante :
- des deuxièmes moyens de transport (90) destinés à recevoir les produits (P) déchargés depuis le dispositif de stockage (80) et destinés à transférer les produits (P) aux premiers moyens de transport (40) lorsque le dispositif de traitement ultérieur est à nouveau opérationnel, les premiers moyens de transport (30, 40) transportant des produits (P) amenés depuis le dispositif de fabrication de produits et les premiers et deuxièmes moyens de transport (30, 40 ; 90) étant conçus de telle sorte qu'ils transportent des produits (P) en même temps.

12. Dispositif selon la revendication 11, **caractérisé en ce que** le dispositif de stockage (80) présente un dispositif à compartiments effectuant un mouvement de va et vient entre deux positions d'extrémité, avec plusieurs logements (82), chaque logement (82) étant réalisé pour recevoir un produit (P), les produits (P) étant reçus successivement dans le dispositif de stockage (80) tandis que le dispositif à compartiments, partant de la première position d'extrémité, se déplace dans la direction de la deuxième position d'extrémité et les produits (P) stockés dans le dispositif de stockage (80) étant à nouveau déchargés successivement depuis le dispositif de stockage (80) tandis que le dispositif à compartiments effectue le déplacement de retour vers la première position d'extrémité, le produit (P) qui est déchargé le premier depuis le dispositif de stockage (80) étant celui qui a été reçu en dernier dans le dispositif de stockage (80) et le produit (P) qui est déchargé en dernier du dispositif de stockage (80) étant celui qui a été reçu en premier dans le dispositif de stockage (80).

13. Dispositif selon la revendication 11 ou 12, **caractérisé par** des dispositifs de commande qui commandent les premiers et les deuxièmes moyens de transport (30, 40 ; 90) de telle sorte qu'un produit (P) transporté par le deuxième moyen de transport (90) est déposé essentiellement à la même place sur l'un des produits (P) transportés par le premier moyen de transport (30, 40) de telle sorte que ces deux produits (P) sont ensuite transférés conjointement au dispositif de traitement ultérieur.

14. Dispositif selon la revendication 13, **caractérisé en ce que** les dispositifs de commande commandent les premiers et les deuxièmes moyens de transport (30, 40 ; 90) de telle sorte qu'un produit (P) transporté par le deuxième moyen de transport (90) est à chaque fois déposé sur un énième des produits (P) transportés par le premier dispositif de transport (30, 40).

15. Dispositif selon l'une des revendications 11 à 14, **caractérisé par** des dispositifs de commande qui commandent, et en particulier, augmentent la vitesse de travail du dispositif de traitement ultérieur pendant le déchargement des produits (P) depuis le dispositif de stockage (80) de telle sorte que le dispositif de traitement ultérieur peut traiter de façon continue tous les produits (P) qui lui sont transférés tandis que des produits (P) sont amenés de façon continue et à une vitesse restant constante depuis le dispositif de fabrication de produits au dispositif de transport.

16. Dispositif selon l'une des revendications 11 à 15, **caractérisé en ce que** les dispositifs destinés à décharger les produits (P) amenés dans le dispositif de transport depuis le dispositif de transport lorsque le dispositif de traitement ultérieur n'est pas opérationnel et que le dispositif de stockage (80) est entièrement rempli de produits (P) présentent des troisièmes moyens de transport (100, 110, 120) ainsi que des dispositifs de réception (T) destinés à recueillir les produits (P).

17. Dispositif selon la revendication 16, **caractérisé en ce que** les troisièmes moyens de transport présentent un dispositif (110) destiné à rassembler dans une pile (S) plusieurs des produits (P) qui sont déchargés depuis le dispositif de transport et à remettre les produits (P) au dispositif de réception (T) sous forme de pile (S).

18. Dispositif selon la revendication 16 ou 17, **caractérisé en ce que** les troisièmes moyens de transport présentent un dispositif de transport (100) destiné à amener des dispositifs de réception (T) vides et un dispositif de transport (120) destiné à emmener des dispositifs de réception (T) remplis.

19. Dispositif selon l'une des revendications 16 à 18, **caractérisé en ce que** les deuxièmes moyens de transport (90) peuvent être déplacés entre une première position et une deuxième position, les deuxièmes moyens de transport (90) se trouvant dans la première position lorsque le dispositif de traitement ultérieur est opérationnel et que les produits (P) sont transférés aux premiers moyens de transport (40) et les deuxièmes moyens de transport (90) se trouvant dans la deuxième position lorsque le dispositif de traitement ultérieur n'est pas opérationnel et que les produits (P) sont transférés aux troisièmes moyens de transport (100, 110, 120).

20. Dispositif selon l'une des revendications 11 à 19, **caractérisé en ce que** les premiers moyens de transport présentent un moyen de transport souple (30) qui peut être déplacé au moins entre une première position et une deuxième position, le moyen de transport souple (30) se trouvant dans la première position lorsque le dispositif de traitement ultérieur est opérationnel et que les produits (P) peuvent être transférés au dispositif de traitement ultérieur et le moyen de transport souple (30) se trouvant dans la deuxième position lorsque le dispositif de traitement ultérieur n'est pas opérationnel et que les produits (P) ne peuvent pas être transférés au dispositif de traitement ultérieur, de sorte que les produits (P) sont amenés au dispositif de stockage (80).

21. Dispositif selon l'une des revendications 11 à 20, **caractérisé par** des dispositifs de capteurs (22, 24) destinés à déterminer les caractéristiques, en particulier les dimensions et/ou les propriétés matérielles, des produits (P) amenés depuis le dispositif de fabrication de produits jusqu'au dispositif de transport, par des dispositifs de commande couplés avec les dispositifs de capteurs (22, 24) ainsi que par des quatrièmes moyens de transport (130) commandés par les dispositifs de commande destinés à évacuer du dispositif de transport les produits (P) dont les caractéristiques déterminées ne coïncident pas avec des valeurs prédéfinies.

22. Dispositif selon la revendication 21, **caractérisé en ce que** le moyen de transport souple (30) des premiers moyens de transport peut être déplacé par les dispositifs de commande dans une troisième position dans laquelle les produits (P) dont les caractéristiques déterminées ne coïncident pas avec les valeurs prédéfinies sont transférés aux quatrièmes moyens de transport (130).

23. Dispositif selon l'une des revendications 11 à 22, **caractérisé en ce que** le produit en forme de bande ou de plaque (P) est un produit préliminaire de l'industrie alimentaire, en particulier un produit intermédiaire de gomme à mâcher, à partir duquel des portions de produit individuelles destinées à la consommation, en particulier des tablettes de gomme à mâcher individuelles, sont fabriquées dans le dispositif de traitement ultérieur.

24. Dispositif selon la revendication 23, **caractérisé en ce que** le dispositif de traitement ultérieur est une machine destinée à emballer les portions de produit individuelles, en particulier les tablettes de gomme à mâcher fabriquées, individuellement et/ou en groupes.
